Europäisches Patentamt

European Patent Office

Office européen des brevets

(19)

(11) **EP 0 809 793 B1**

## (12) EUROPÄISCHE PATENTSCHRIFT

(45) Veröffentlichungstag und Bekanntmachung des Hinweises auf die Patenterteilung:
**27.10.1999 Patentblatt 1999/43**

(21) Anmeldenummer: **96902856.2**

(22) Anmeldetag: **12.02.1996**

(51) Int Cl.⁶: **G01L 19/02**, G01L 19/04, B60R 21/00

(86) Internationale Anmeldenummer:
**PCT/DE96/00220**

(87) Internationale Veröffentlichungsnummer:
**WO 96/25651 (22.08.1996 Gazette 1996/38)**

(54) **DRUCKMESSUMFORMER, INSBESONDERE ZUR SENSIERUNG EINER SEITENKOLLISION BEI EINEM KRAFTFAHRZEUG**

PRESSURE TRANSDUCER, IN PARTICULAR FOR SENSING A LATERAL COLLISION IN A MOTOR VEHICLE

TRANSDUCTEUR DE PRESSION, EN PARTICULIER POUR LA DETECTION D'UNE COLLISION LATERALE DANS UN VEHICULE AUTOMOBILE

(84) Benannte Vertragsstaaten:
**DE FR GB IT**

(30) Priorität: **17.02.1995 DE 19506014**

(43) Veröffentlichungstag der Anmeldung:
**03.12.1997 Patentblatt 1997/49**

(73) Patentinhaber: **SIEMENS AKTIENGESELLSCHAFT 80333 München (DE)**

(72) Erfinder:
• **SWART, Marten D-93083 Obertraubling (DE)**
• **PFAU, Lorenz D-93053 Regensburg (DE)**

• **FRIMBERGER, Manfred D-84061 Ergoldsbach (DE)**
• **PIETSCH, Arnulf D-39112 Magdeburg (DE)**

(56) Entgegenhaltungen:
EP-A- 0 071 962    EP-A- 0 169 414
WO-A-90/11500    WO-A-93/24818
WO-A-94/11223    US-A- 4 598 381
US-A- 5 287 748

• IEEE TRANSACTIONS ON INSTRUMENTATION AND MEASUREMENT, Bd. 39, Nr. 3, 1.Juni 1990, Seiten 531-534, XP000129133 JOHNSON C D ET AL: "BRIDTE-TO-COMPUTER DATA ACQUISITION SYSTEM WITH FEEDBACK NULLING"

**Beschreibung**

Die Erfindung betrifft einer Druckmeßumformer, insbesondere zur Sensierung einer Seitenkollision bei einem Kraftfahrzeug.

Ein bekannter Druckmeßumformer (WO 94/11223-A1) überwacht mit einem Luftdruckdetektor als Sensor den Luftdruck in einem Hohlraum eines Kraftfahrzeugseitenteils insbesondere bei einer Seitenkollision des Kraftfahrzeugs und gibt ein elektrisches Nutzsignal ab, das durch die gemessene Luftdruckänderung bestimmt ist. Eine Elektronik wertet das Nutzsignal aus und löst gegebenenfalls Rückhalteeinrichtungen des Kraftfahrzeugs aus.

Das Nutzsignal eines solchen Druckmeßumformers ist nicht eindeutig.

Aus der Druckschrift US 3 717 038 ist ein Druckmeßumformer zur Bestimmung des Gasflusses im einem gasbetriebenen Motor bekannt. Der Druckmeßumformer weist zwei Sensoreinrichtungen auf; die erste Sensoreinrichtung nimmt eine Druckänderung im Meßrohr auf, die zweite Sensoreinrichtung den Umgebungsdruck. Die zweite Sensoreinrichtung ist in der Rückführung eines Regelkreises angeordnet, dessen Regeleinrichtung proportionales Verhalten aufweist, ebenso wie die Regelstrecke. Ein Differenzverstärker bildet die Regeldifferenz aus den Ausgangssignalen der beiden Sensoreinrichtungen. Das Ausgangssignal des Differenzverstärkers wird als Regelgröße der zweiten Sensoreinrichtung zugeführt und beeinflußt die Empfindlichkeit der zweiten Sensoreinrichtung. Dieser Druckmeßumformer liefert am Ausgang des Vergleichers ein Signal, das proportional zur auf den Umgebungsdruck bezogenen Druckänderung ist.

Ein solcher Druckmeßumformer erfordert zwei Sensoreinrichtungen, die unabhängig voneinander unterschiedliche Druckgrößen messen. Keine der beiden Sensoreinrichtungen nimmt aber den Gesamtdruck als Summe des Umgebungsdrucks und einer Druckänderung auf.

In der US 3 841 150 wird ein Druckmeßumformer vorgeschlagen, bei dem das Ausgangssignal einer Sensoreinrichtung von Druckänderungen abhängt. Die Sensoreinrichtung enthält zwei piezoresistive Meßwiderstände auf einer Membran. Eine Konstantstrom-Schaltungsanordnung mit Spannungsquelle, Operationsverstärkern und Kalibrierwiderständen gewährleistet einen konstanten Stromfluß durch die Meßwiderstände. Die Spannungsdifferenz zwischen den an den Meßwiderständen anliegenden Spannungen wird zum einen als Nutzsignal verwendet und zum anderen zur Konstantstrom-Schaltungsanordnung rückgeführt, um die Linearität der Sensoreinrichtung zu erhöhen.

Die Erfindung hat die Aufgabe, einen Druckmeßumformer zu schaffen, der die Nachteile von bekannten Druckmeßumformern vermeidet und insbesondere ein Nutzsignal abgibt, das vom herrschenden Umgebungsdruck unabhängig ist.

Bei einem Einsatz des Druckmeßumformers im Kraftfahrzeug liefert dieser ein Signal, das von Luftdruckänderungen und damit von der Höhe über dem Meeresspiegel und der Wetterlage abhängt. Somit ist auch der Signalverlauf einer Druckänderung, die durch ein "schnelles" Druckereignis, wie z.B. einen Seitenaufprall hervorgerufen wird, vom Umgebungsdruck abhängig.

Das Nutzsignal eines Druckmeßumformers eignet sich deshalb bei seinem vorgenannten Einsatz nur dann zur quantitativen Auswertung, insbesondere zur Ansteuerung von Rückhaltesystemen, wenn Druckänderungen relativ in das Nutzsignal eingehen.

Die Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung wird anhand der Zeichnung erläutert. Es zeigen

Figur 1: den zeitlichen Verlauf des Gesamt-Luftdrucks in einer Fahrzeugtür während einer Seitenkollision, abhängig vom Umgebungsluftdruck,

Figur 2: den zeitlichen Verlauf der Luftdruckänderung in einer Fahrzeugtür während einer Seitenkollision, abhängig vom Umgebungsluftdruck,

Figur 3: den zeitlichen Verlauf der relativen Luftdruckänderung in einer Fahrzeugtür während einer Seitenkollision,

Figur 4: ein erstes Blockschaltbild eines Druckmeßumformers,

Figur 5: ein zweites Blockschaltbild eines Druckmeßumformers,

Figur 6: ein drittes Blockschaltbild eines Druckmeßumformers,

Figur 7: einen Schaltplan eines Druckmeßumformers.

Ein in einer ersten Figur mit einem Bezugszeichen versehenes Element hat in einer anderen Figur das gleiche Bezugszeichen, sofern das Element der ersten Figur mit dem Element der anderen Figur übereinstimmt.

Eine durch ein Druckereignis verursachte Druckänderung $\Delta p$ geht vom herrschenden Umgebungsdruck $p_0$ aus. Der Gesamtdruck p (auch absoluter Druck) setzt sich damit additiv aus der Druckänderung $\Delta p$ und dem Umgungsdruck $p_0$ zusammen.

Ein Signal ist im folgenden als zeitlicher Verlauf einer Größe definiert. Ein Gesamtdrucksignal p(t) setzt sich damit additiv aus einem Druckänderungssignal $\Delta p(t)$ und einem Umgebungsdrucksignal $p_0(t)$ zusammen. Das Druckänderungssignal $\Delta p(t)$ folgt schnellen Änderungen eines Druckereignisses, insbesondere Druckstößen, die bei einem Seitenaufprall auftreten. Das Umgebungsdrucksignal $p_0(t)$ folgt langsamen An-

derungen des Umgebungsdrucks $p_0$.

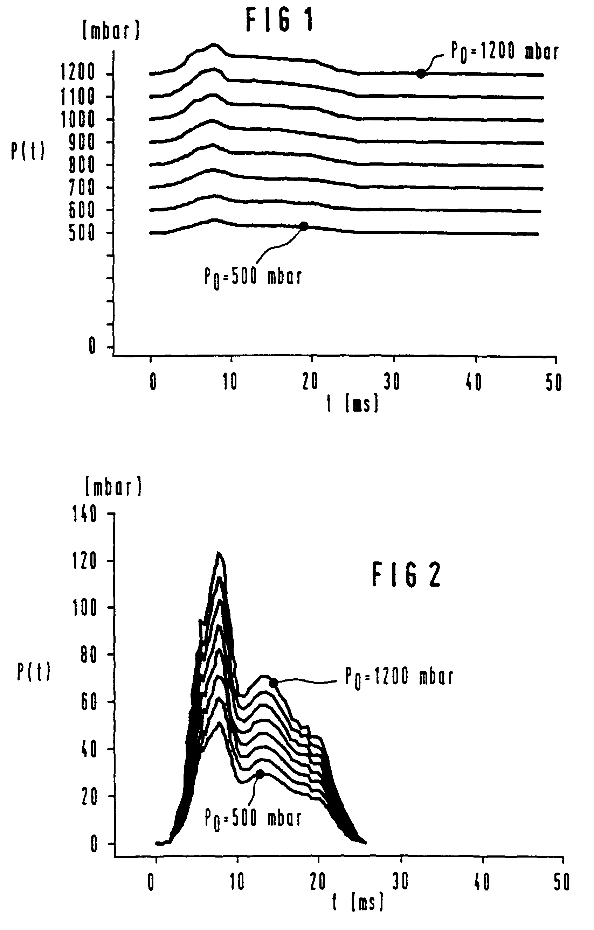

In der Beschreibung der Figuren 1 bis 3 sind alle Druckgrößen Luftdruckgrößen. Die aufgenommenen Druckgrößen sind aber auch in anderen druckübertragenden Medien meßbar.

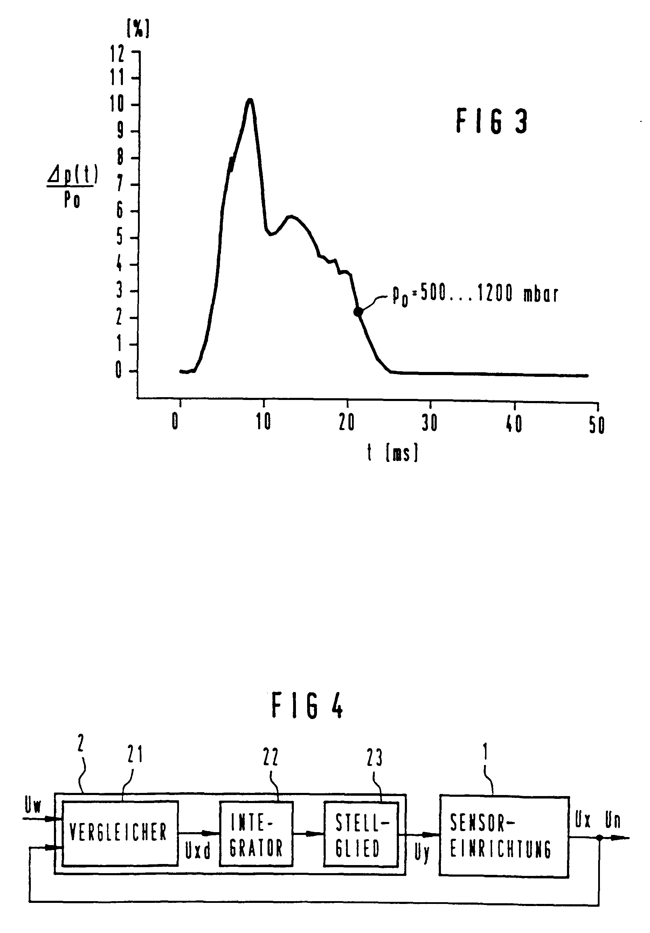

Wird bei einem Kraftfahrzeug während einer Seitenkollision ein Seitenteil deformiert, ändert sich das Volumen eines Hohlraums im Seitenteil und damit der Gesamtdruck p im Hohlraum (Figur 1). Eine zugehörige Sensoreinrichtung zur Gesamtdruckmessung ist im Hohlraum angeordnet, sodaß sie den Umgebungsdruck $p_0$ zuzüglich der durch den Seitenaufprall hervorgerufenen Druckänderung $\Delta p$ aufnehmen kann. Figur 2 zeigt das zugehörige Druckänderungssignal $\Delta p(t)$ - ein Stoßsignal von etwa 25 ms Dauer, aufgenommen von einer im Hohlraum angeordneten Sensoreinrichtung zur Druckänderungsmessung. Nach dem Aufprall zum Zeitpunkt t=0 ms mit definierten Aufprallbedingungen hinsichtlich Aufprallkörper, Aufprallwinkel, Aufprallgeschwindigkeit, etc. beträgt die Druckänderung $\Delta p$ im Hohlraum bei einem niedrigen Umgebungsdruck $p_0$ von beispielsweise 500 mbar maximal 50 mbar, bei einem hohen Umgebungsdruck $p_0$ von beispielsweise 1200 mbar maximal 125 mbar: Die durch das Druckereignis "Seitenaufprall" verursachte Druckänderung $\Delta p$ steigt mit steigendem Umgebungsdruck $p_0$ bei gleicher Volumenänderung des überwachten Volumens. Die auf den Umgebungsdruck $p_0$ bezogene Druckänderung $\Delta p$ ist die relative Druckänderung, die den Umgebungsdruck $p_0$ als Parameter nicht aufweist. Figur 3 zeigt den Verlauf der relativen Druckänderung bezüglich des Druckereignisses "Seitenaufprall". Der Umgebungsdruck $p_0$ wird jeweils mit einer eigenen Sensoreinrichtung aufgenommen, die der durch den Seitenaufprall hervorgerufenen Druckänderung $\Delta p$ im Hohlraum nicht ausgesetzt ist.

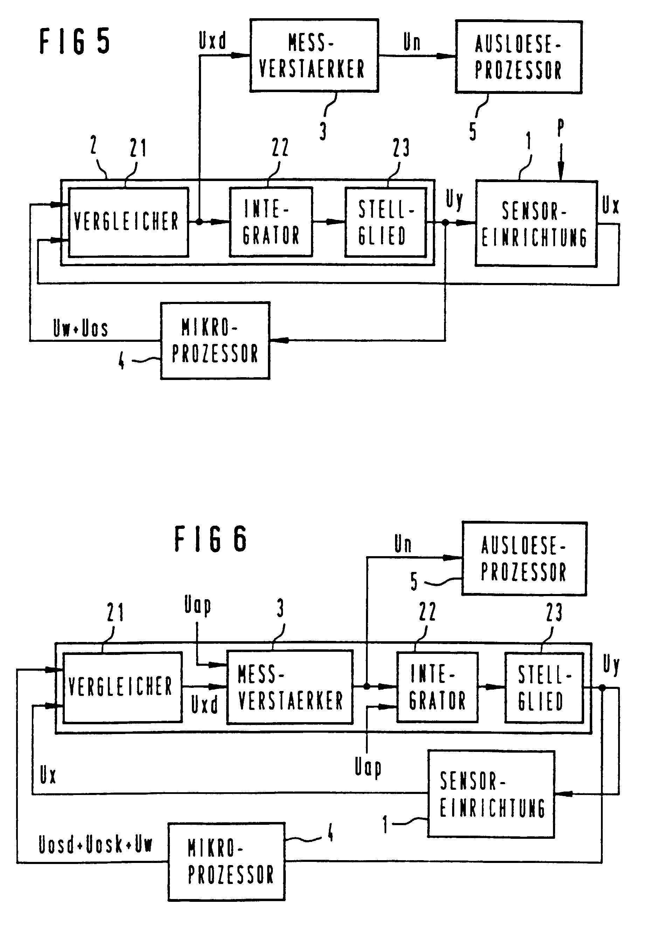

Der Druckmeßumformer nach Figur 4 enthält eine Sensoreinrichtung 1, die eine elektrische Ausgangsgröße $U_x$ liefert. Auf die Sensoreinrichtung 1 wirkt die Stellgröße $U_y$ einer Regeleinrichtung 2 mit integrierendem Verhalten. Die Regeleinrichtung 2 enthält einen Vergleicher 21, einen Integrator 22 und ein Stellglied 23. Der Vergleicher 21 berechnet die Regeldifferenz $U_{xd}$ der Regeleinrichtung 2 aus einem Sollwert $U_w$ und der Ausgangsgröße $U_x$ der Sensoreinrichtung 1. Die Nutzgröße $U_n$ wird von der Ausgangsgröße $U_x$ der Sensoreinrichtung 1 abgeleitet. Sensoreinrichtung 1 und Regeleinrichtung 2 bilden einen einschleifigen, geschlossenen Regelkreis.

Die Sensoreinrichtung 1 wandelt das Gesamtdrucksignal p(t) in ihr vom Gesamtdruck p abhängendes, elektrisches Ausgangssignal $U_x(t)$. Analog zum Drucksignal p(t) hat auch das Ausgangssignal $U_x(t)$ der Sensoreinheit 1 zwei Signalkomponenten: Ein niederfrequentes Grundsignal $U_{x0}(t)$, das durch das Umgebungsdrucksignal $p_0(t)$ und eine veränderbare Empfindlichkeit der Sensoreinrichtung 1 bestimmt ist, und ein höherfrequentes Informationssignal $U_x\Delta(t)$, das durch

das Druckänderungssignal $\Delta p(t)$ und die Empfindlichkeit der Sensoreinrichtung 1 bestimmt ist.

Auch das Regeldifferenzsignal $U_{xd}(t)$ hat damit zwei Signalkomponenten: Ein Grunddifferenzsignal $U_{xd0}(t)$, das durch das Grundsignal $U_{x0}(t)$ abzüglich des Sollwerts Uw bestimmt ist, und ein Informationsdifferenzsignal $U_{xd}\Delta(t)$, das gleich dem Informationssignal $U_x\Delta(t)$ ist.

Die Integrationszeitkonstante des Integrators 22 ist mindestens um den Faktor zwei größer als die Periodendauer der Grundschwingung eines aufgenommenen Druckänderungssignals $\Delta p(t)$: Der Integrator 22 wirkt als Tiefpaß und summiert nur die niederfrequente Grunddifferenz $U_{xd0}$ auf, nicht aber die höherfrequente Informationsdifferenz $U_{xd}\Delta$. Je größer vorgenannter Faktor ist, desto geringer ist der Einfluß der höherfrequenten Informationsdifferenz $U_{xd}\Delta$ auf das Ausgangssignal des Integrators 22. Die vom Integrator 22 aufsummierte Grunddifferenz $U_{xd0}$ bestimmt über das Stellglied 23 die Empfindlichkeit der Sensoreinrichtung 1.

Die Grundfrequenz eines Druckänderungssignals $\Delta p(t)$ bei einer Seitenkollision des Kraftfahrzeugs liegt in etwa bei 35 bis 50 Hz. Die Integrationsfrequenz beträgt vorzugsweise 2 bis 3 Hz. Mit einer Integrationsfrequenz von 1 bis 5 Hz können Druckänderungssignale $\Delta p(t)$ mit Grundfrequenzen ab 10 Hz detektiert werden.

Der Regelkreis regelt also insbesondere die niederfrequente, nur von Umgebungsdruckänderungen abhängige Grundgröße $U_{x0}$ als Bestandteil der Ausgangsgröße $U_x$ der Sensoreinrichtung 1 auf den Sollwert $U_w$: Steigt/sinkt der Umgebungsdruck $p_0$ und mit ihm die Grundgröße $U_{x0}$ der Sensoreinrichtung 1, so wird aufgrund der sich einstellenden negativen/positiven Grunddifferenz $U_{xd0}$, die Empfindlichkeit der Sensoreinrichtung 1 reduziert/erhöht: Die kurzzeitig angestiegene/gesunkene Grundgröße $U_{x0}$ sinkt/steigt nach der Einschwingzeit des Regelkreises wieder auf den Sollwert $U_w$.

Mit dem erhöhten/gesunkenen Umgebungsdruck p0 steigt/sinkt auch die Druckänderung $\Delta p$ bezüglich eines Druckereignisses (siehe Figur 2) und mit ihr die Informationsgröße $U_x\Delta$ als Bestandteil der Ausgangsgröße $U_x$ der Sensoreinrichtung 1. Diese Erhöhung/Reduzierung der Informationsgröße $U_x\Delta$ wird durch die vorgenannte Reduzierung/Erhöhung der Empfindlichkeit der Sensoreinrichtung 1 ausgeglichen, die auf das Ausregeln der Grundgröße $U_{x0}$ der Sensoreinrichtung auf den Sollwert $U_w$ erfolgt ist: Der Druckmeßumformer wandelt vom Umgebungsdruck $p_0$ abhängige Druckänderungssignale $\Delta p(t)$ in vom Umgebungsdruck $p_0$ unabhängige Informationssignale $U_x\Delta(t)$, indem durch Ausregeln des Grundsignals $U_{x0}$ auf den Sollwert $U_w$ die Empfindlichkeit der Sensoreinrichtung 1 umgekehrt proportional zum Umgebungsdruck $p_0$ geändert wird. Die Informationsgröße $U_x\Delta$ ist so durch die relative Druckänderung bestimmt.

Die Nutzgröße $U_n$, die wiederum durch die Informationsgröße $U_x\Delta$ bestimmt ist, kann direkt am Ausgang der Sensoreinrichtung 1, spätestens aber - in Wirkungsrichtung des Regelkreises - am Ausgang des Vergleichers 21 bzw. Eingang des Integrators 22 abgeleitet werden. Wird die Nutzgröße $U_n$ direkt am Ausgang der Sensoreinrichtung 1 abgeleitet, hat sie einen ersten Signalanteil, der gleich der Grundgröße $U_{x0}$ der Sensoreinrichtung 1 und damit quasi-konstant ist: Langsame Änderungen des Umgebungsdrucks $p_0$ haben im geschlossenen Regelkreis eine nur minimale Abweichung des Grundsignals $U_{x0}(t)$ von Null zur Folge, da die Einschwingzeit des Regelkreises klein ist gegen die zeitlichen Änderungen des Umgebungsdruck $p_0$. Der zweite Signalanteil der Nutzgröße $U_n$ ist gleich der Informationsgröße $U_x\Delta$. Wird die Nutzgröße $U_n$ von der Regeldifferenz $U_{xd}$ abgeleitet, so ist die Nutzgröße $U_n$ lediglich von der Informationsgröße $U_x\Delta$/der Informationsdifferenz $U_{xd}\Delta$ abhängig und gibt eine relative Druckänderung ohne additive Konstante wieder.

Das Blockschaltbild eines Druckmeßumformers nach Figur 5 zeigt die vorgenannte Ableitung der Nutzgröße $U_n$ von der Regeldifferenz $U_{xd}$ der Regeleinrichtung 2. Die durch einen Meßverstärker 3 verstärkte Regeldifferenz $U_{xd}$ liegt als Nutzgröße $U_n$ am Eingang eines Auslöseprozessors 5 an.

Bei einem Einsatz eines solchen Druckmeßumformers zur Detektion von Seitenkollisionen wird das Nutzsignal vom Auslöseprozessor 5 nach hinreichend bekannten Verfahren ausgewertet: Der Auslöseprozessor 5 vergleicht die Nutzgröße $U_n$ mit einem Schwellwert und steuert bei Überschreiten dieses Schwellwertes beispielsweise einen Seitenairbag des Kraftfahrzeugs an. Die Nutzgröße $U_n$ kann auch zuerst integriert und dann mit einem gegebenenfalls zeitlich veränderbaren Schwellwert verglichen werden.

Desweiteren berücksichtigt das Ausführungsbeispiel der Erfindung gemäß Figur 5 mögliche Fehlerquellen eines realen Druckmeßumformers: Die Ausgangsgröße $U_x$ der realen Sensoreinrichtung 1 enthält neben der Grundgröße $U_{x0}$ und der Informationsgröße $U_x\Delta$ eine bauteilbedingte Offsetgröße $U_{os}$, die sich aus einer konstanten Offsetgröße $U_{osk}$ und einer dynamischen Offsetgröße $U_{osd}$ zusammensetzen kann und deren Ursache Offset- und Gleichtaktfehler der Sensoreinrichtung 1 und des Vergleichers 21 sind. Bei einer Anordnung gemäß Figur 4 werden Grundgröße $U_{x0}$ mit impliziter Offsetgröße $U_{os}$ auf den Sollwert $U_w$ geregelt, sodaß die Grundgröße $U_{x0}$ der Sensoreinrichtung 1 trotz Regelung wieder leicht veränderliche Werte annehmen kann, insbesondere wenn die Sensoreinrichtung 1 eine dynamische Offsetgröße $U_{osd}$ hat: Die Grundgröße $U_{x0}$ mit impliziter Offsetgröße $U_{os}$ wird deshalb auf den Sollwert $U_w$ zuzüglich der Offsetgröße $U_{os}$ geregelt.

Sollwert $U_w$ und konstante Offsetgröße $U_{osk}$ werden vor Inbetriebnahme des Druckmeßumformers ermittelt und anschließend im Festwertspeicher eines Mikroprozessors 4 abgelegt. Ist die dynamische Offsetgröße $U_{osd}$ durch die Empfindlichkeit der Sensoreinrichtung 1 bestimmt, wird sie vom Mikroprozessor 4 in Abhängigkeit von der Stellgröße $U_y$ ständig neu berechnet und zum Sollwert $U_w$ und konstanten Offsetgrößenanteil $U_{osk}$ addiert.

Im Ausführungsbeispiel der Erfindung nach Figur 6 ist der Meßverstärker 3 Bestandteil der Regeleinrichtung 2 und verstärkt die Regeldifferenz $U_{xd}$.

Gegenüber der Anordnung des Meßverstärkers 3 außerhalb des Regeleinrichtung 2 gemäß Figur 5 werden nun neben der Informationsgröße $U_x\Delta$/Informationsdifferenzgröße $U_{xd}\Delta$ der Sensoreinrichtung 1 insbesondere auch Abweichungen der Grunddifferenz $U_{xd0}$ von Null verstärkt, die aus umgebungsdruckbedingten Änderungen der Grundgröße $U_{x0}$ resultieren und ein erhöhtes Ausgangssignal am Integrator 22 zur Folge haben. Mit einer Reduzierung der Steigung der Übertragungskennlinie des Stellglieds 23 wird dem erhöhten Ausgangssignal des Integrators 22 Rechnung getragen. Die Nutzgröße $U_n$ wird am Ausgang des Meßverstärkers 3 abgeleitet.

Meßverstärker 3 und Integrator 22 werden in einem Arbeitspunkt $U_{ap}$ betrieben. Dabei wird der Sollwert $U_w$ so eingestellt, daß die Regeldifferenz $U_{xd}$ im stationären Fall gleich dem Arbeitspunkt $U_{ap}$ ist.

Ein Offsetfehler des Meßverstärkers 3 ist vernachlässigbar, da seine Ausgangsgröße groß ist gegen seine Offsetgröße.

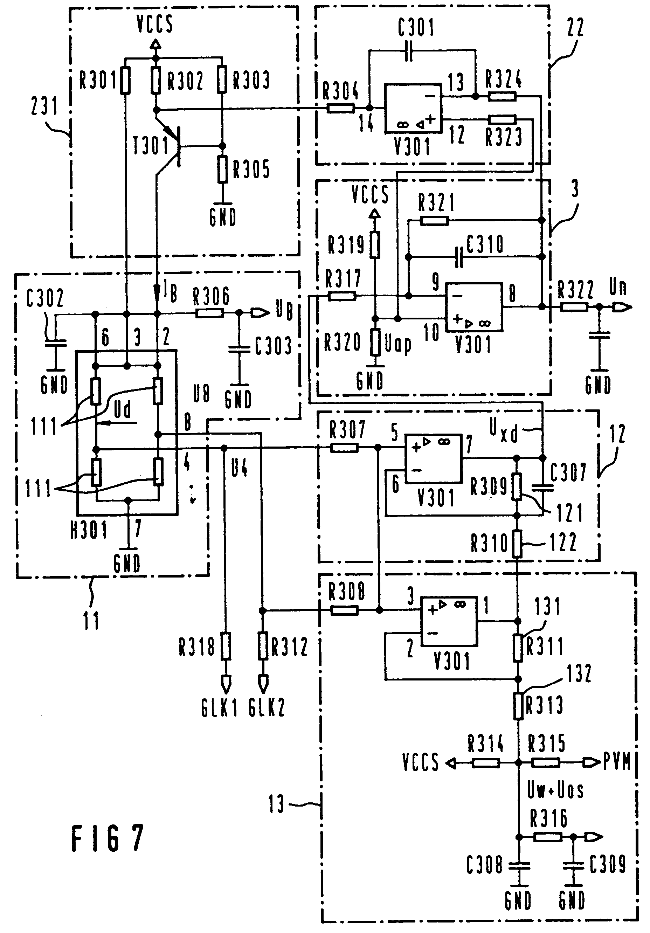

Figur 7 zeigt eine schaltungstechnische Realisierung der Anordnung nach Figur 6.

Die Sensoreinrichtung 1 hat einen Sensor mit einem druckabhängigen Widerstand 111, der in einer Widerstandsmeßbrücke 11 nach Wheatstone mit einer Brückenempfindlichkeit, einem/einer Brückenspeisestrom/spannung $I_b/U_b$ und einer Brückendiagonalspannung $U_d=U_8-U_4$ angeordnet ist. Der Sensor wandelt den Gesamtdruck p annähernd linear in Widerstandswerte des druckabhängigen Widerstands 111. Dazu hat der Sensor eine Meßzelle mit einer Kammer, die durch eine Membran luftleer verschlossen ist. Der druckabhängige Widerstand 111 des Sensors ist ein Halbleiter-Dehnungsmeßstreifen, der nach dem piezoresistiven Prinzip arbeitet. Halbleiter-Dehnungsmeßstreifen und Membran können insbesondere monolithisch integriert sein.

Die Empfindlichkeit der Widerstandsmeßbrücke 11 wird dadurch erhöht, daß die Widerstandsmeßbrücke 11 insbesondere eine Vollbrücke mit vier druckabhängigen Widerständen 111 ist. Ein großer Brückenoffset $s_{off}$ der Widerstandsmeßbrücke 11 kann mikroprozessorgesteuert über die Anschlüsse GLK1/GLK2 vorkompensiert werden.

Die Ausgangsgröße $U_x$ der Sensoreinrichtung 1 ist durch die Brückendiagonalspannung $U_d=U_8-U_4$ der Widerstandsmeßbrücke 11 und damit durch den Gesamtdruck p, die Brückenempfindlichkeit, den/die Brückenspeisestrom/spannung $I_b/U_b$ und den gemeinsamen Verstärkungsfaktor V zweier Differenzverstärker 12 und 13 bestimmt. Die Empfindlichkeit der Sensoreinrichtung 1 ist bestimmt durch die Brückenempfindlichkeit, den/die Brükkenspeisestrom/spannung $I_b/U_b$ und den gemeinsamen Verstärkungsfaktor V. Die Differenzverstärker 12 und 13 verrechnen Potentiale $U_4$ und $U_8$ der Widerstandsmeßbrücke 11 mit dem Sollwert $U_w$ und der Offsetgröße Uos zur Regeldifferenz $U_{xd}$, die am Ausgang des Differenzverstärkers 12 anliegt. Die Differenzverstärker 12 und 13 übernehmen damit auch die Funktion des Vergleichers 21. Widerstände 121 und 132, sowie 122 und 131 haben paarweise gleiche Werte, damit Sollwert $U_w$ und Offsetgröße Uos mit der Verstärkung Eins in die Regeldifferenz $U_{xd}$ eingehen. Die Regeldifferenz $U_{xd}$ wird vom Meßverstärker 3 verstärkt und vom Integrator 22 aufsummiert, jeweils bezüglich des Arbeitspunktes $U_{ap}$. Das Ausgangssignal des Integrators 22 steuert eine Stromquelle 231 als Stellglied 23 an, die den Brückenspeisestrom $I_b$ für die Widerstandsmeßbrücke 11 liefert und damit die Empfindlichkeit der Sensoreinrichtung 1 bestimmt. Das Stellglied 23 kann auch eine Spannungsquelle sein, die die Brückenspeisespannung $U_b$ liefert. Der Integrator 22 kann auch in Form eines Mikroprozessors realisiert werden. Der Meßverstärker liefert die Nutzgröße $U_n$.

Ist das Stellglied 23 eine gesteuerte Stromquelle 231 und weist die Widerstandsmeßbrücke 11 einen Kurzschluß auf, bricht die Brückenspeisespannung $U_b$ zusammen. Damit diese Änderung der Brückenspeisespannung $U_b$ nicht als sprunghafte Änderung des Umgebungsdrucks $p_0$ fehlinterpretiert und ausgeregelt wird, wird die Brückenspeisespannung $U_b$ mikroprozessorgesteuert auf sprunghafte Änderungen überwacht: Ein Kurzschluß in der Widerstandsmeßbrücke 11 erzeugt eine Fehlermeldung. Ist das Stellglied 23 eine gesteuerte Spannungsquelle, ist die Überwachung des Brückenspeisestroms $I_b$ auf sprunghafte Änderungen ebenso möglich, aber aufgrund der dazu notwendigen Strommessung aufwendiger zu realisieren.

Die konstante Offsetgröße $U_{osk}$ der Sensoreinrichtung 1 ist bestimmt durch das Produkt eines gemeinsamen Verstärkeroffsets $v_{off}$ der Differenzverstärker 12 und 13 mit ihrem gemeinsamen Verstärkungsfaktor V. Zur Ermittlung des Verstärkeroffsets $v_{off}$: Am Druckmeßumformer, der nur den Umgebungsdruck $p_0$ aufnimmt, wird ein erster Sollwert $U_{w1}$ eingestellt. Eine sich einstellende Brückenspeisespannung $U_{b1}$, die im Aussteuerbereich des Integrators 22 liegt, wird nach der Einschwingzeit des Regelkreises gemessen. Ein zweiter vorgegebener Sollwert $U_{w2}$, der möglichst stark vom ersten Sollwert $U_{w1}$ abweicht, verursacht eine zweite Brückenspeisespannung $U_{b2}$. Der Verstärkeroffset $v_{off}$ berechnet sich aus den gemessenen Größen nach der Vorschrift:

$$v_{off}*V = ((U_{w2}*U_{b1}-U_{w1}*U_{b2})/(U_{b1}-U_{b2}))-U_{ap}.$$

Die dynamische Offsetgröße $U_{osd}$ der Sensoreinrichtung 1 ist bestimmt durch das Produkt eines Brückenoffsets $s_{off}$ der Widerstandsmeßbrücke 11 mit dem gemeinsamen Verstärkungsfaktor V der Differenzverstärker 12 und 13. Der Brückenoffset $s_{off}$ berücksichtigt auch Gleichtaktfehler der Differenzverstärker 12 und 13. Zur Ermittlung des Brückenoffsets $s_{off}$: Der Druckmeßumformer nimmt ein Gesamtdruck-Stoßsignal $p_3(t)$ mit dem maximalen Gesmtdruck $p_3$ auf. Die sich einstellenden Werte Brückenspeisespannung $U_{b3}$, Sollwert $U_{w3}$ und Nutzgröße $U_{n3}$ werden gemessen. Ein Referenzdruckmeßumformer ermittelt die maximale Druckänderung $\Delta p_3=p_3-p_0$ zu vorgenanntem Druckstoßsignal $p_3(t)$ bezogen auf den Umgebungsdruck $p_0$. Der Brückenoffset $s_{off}$ berechnet sich aus den gemessenen Größen nach der Vorschrift:

$$s_{off}*V = (U_{w3}-U_{ap}-v_{off}*V-U_{n3}*(p_3-p_0)/V1*p_0)/U_{b3},$$

wobei V1 der Verstärkungsfaktor des Meßverstärkers 3 ist. Desweiteren kann der Druckmeßumformer zur Ermittlung des Brückenoffsets $s_{off}$ auch mit einem ersten statischen Gesmtdruck $p_4$ beaufschlagt werden. Die sich einstellende Brückenspeisespannung $U_{b4}$ wird gemessen. Desgleichen wird die Brückenspeisespannung $U_{b5}$ gemessen, wenn der Druckmeßumformer einem zweiten statischen Gesamtdruck $p_5$ ausgesetzt ist, der kleiner ist als der erste Gesamtdruck $p_4$. Der Brückenoffset $s_{off}$ berechnet sich dann aus den gemessenen Größen nach der Vorschrift:

$$s_{off}*V1 = 2*(p_5*U_{b5}-p_4*U_{b4})/(U_{b5}*U_{b4}*(p_5-p_4)).$$

Vor Inbetriebnahme des Druckmeßumformers ist der Sollwert $U_w$ so einzustellen, daß die Regeldifferenz $U_{xd}$ den Wert des Arbeitspunktes $U_{ap}$ annimmt. Der Abgleich kann bei beliebigem Umgebungsdruck erfolgen und gehorcht der Vorschrift:

$$U_{xd} = U_{ap} = U_w + U_{osk} + U_{osd},$$

mit

$$U_{osk} = v_{off}*V \text{ und } U_{osd} = s_{off}*V*U_y.$$

Der Druckmeßumformer hat insbesondere den Vorteil, daß Störgrößen und Fehler im Nutzsignalpfad automatisch ausgeregelt werden: Temperaturabhängige Verstärkungsfehler der Widerstandsmeßbrükke 11 und der Differenzverstärker 12 und 13 werden ebenso kompensiert wie ein Empfindlichkeitsverlust des Sensors durch ein Leck in seiner Membran. Fehler durch toleranzbehaftete Widerstände der Sensoreinrichtung werden kompensiert. Aufgrund der Regelung ist auch die Kenntnis der Empfindlichkeit des Sensors zur quantitativen Auswertung der Nutzgröße $U_n$ nicht

mehr nötig.

## Patentansprüche

1. Druckmeßumformer, insbesondere zur Sensierung einer Seitenkollision bei einem Kraftfahrzeug,

   der ein Drucksignal in ein elektrisches Nutzsinal ($U_n$(t)) wandelt, das durch das Ausgangssignal ($U_x$(t)) einer Sensoreinrichtung (1) mit veränderbarer Empfindlichkeit bestimmt ist, wobei das Ausgangssignal ($U_x$(t)) der Sensoreinrichtung (1) durch den gemessenen Gesamtdruck (p) bestimmt ist,
   bei dem die Sensoreinrichtung (1) und eine Regeleinrichtung (2) einen einschleifigen Regelkreis bilden und die Empfindlichkeit der Sensoreinrichtung (1) abhängig von der Stellgrösse ($U_y$) der Regeleinrichtung (2) ist,
   bei dem die Regeldifferenz ($U_{xd}$) der Regeleinrichtung (2) durch einen Sollwert ($U_w$) und das Ausgangssignal ($U_x$(t)) der Sensoreinrichtung (1) bestimmt ist, und
   bei dem die Regeleinrichtung (2) integrierendes Verhalten aufweist und die Integrationszeitkonstante der Regeleinrichtung (2) um den Faktor 2 größer ist als die Periodendauer der Grundschwingung einer zu detektierenden, schnellen Änderung ($\Delta p$) des Drucksignals (p (t)).

2. Druckmeßumformer nach Anspruch 1, bei dem die Regeldifferenz ($U_{xd}$) von dem Sollwert ($U_w$) zuzüglich einer Offsetgröße ($U_{os}$) abhängig ist, die durch Offset- und Gleichtaktfehler der Bauelemente des Druckmeßumformers bestimmt ist.

3. Druckmeßumformer nach Anspruch 2, bei dem die Offsetgröße von einer konstanten Offsetgröße ($U_{osk}$) und einer dynamischen Offsetgröße ($U_{osd}$) abhängt, wobei die dynamische Offsetgröße ($U_{osd}$) durch die Stellgröße ($U_y$) der Regeleinrichtung (2) bestimmt ist.

4. Druckmeßumformer nach Anspruch 1, bei dem die Integrationszeitkonstante der Regeleinrichtung (2) mindestens um den Faktor 4 größer ist als die Periodendauer der Grundschwingung einer zu detektierenden, schnellen Änderung des Drucksignals (p (t)).

5. Druckmeßumformer nach Anspruch 1, bei dem die Sensoreinrichtung (1) einen Sensor mit einem druckabhängigen Widerstand (111) zur Messung des Gesamtdrucks (p) enthält.

6. Druckmeßumformer nach Anspruch 5, bei dem der druckabhängige Widerstand des Sensors in einer Widerstandsmeßbrücke (11) angeordnet ist, wobei der/die Brückenspeisestrom/spannung ($I_b$/$U_b$) der Widerstandsmeßbrücke (11) durch die Stellgröße ($U_y$) der Regeleinrichtung (2) bestimmt ist, und das Ausgangssignal ($U_x$) der Sensoreinrichtung (1) durch die Brückendiagonalspannung ($U_d$) der Widerstandsmeßbrücke (11) bestimmt ist.

7. Druckmeßumformer nach Anspruch 6, bei dem zwei Differenzverstärker (12) (13) die Brückendiagonalspannung ($U_d$), den Sollwert ($U_w$) und eine Offsetgröße ($U_{os}$) verrechnen, wobei die Offsetgröße ($U_{os}$) von einem Brückenoffset ($s_{off}$) der Widerstandsmeßbrücke (11), einem gemeinsamen Verstärkeroffset ($v_{off}$) der Differenzverstärker (12) (13) und der Stellgröße ($U_y$) der Regeleinrichtung (2) abhängig ist.

8. Druckmeßumformer nach Anspruch 1, bei dem die Regeleinrichtung einen Integrator (22) hat und die Regeldifferenz ($U_{xd}$) von einem Meßverstärker (3) verstärkt wird, wobei die Eingangsgröße des Integrators (22) und die Nutzgröße ($U_n$) aus der verstärkten Regeldifferenz abgeleitet werden.

9. Druckmeßumformer nach Anspruch 8, bei dem Meßverstärker (3) und Integrator (22) einen Arbeitspunkt ($U_{ap}$) haben und die Regeldifferenz ($U_{xd}$) den Wert des Arbeitspunktes ($U_{ap}$) annimmt.

10. Druckmeßumformer nach Anspruch 1, bei dem die Stellgröße ($U_y$) der Regeleinrichtung (2) von einem Mikroprozessor überwacht wird, der ein Warnsignal abgibt, wenn sich die Stellgröße ($U_y$) sprunghaft ändert.

## Claims

1. Pressure transducer, in particular for sensing a lateral collision in a motor vehicle,

   which converts a pressure signal into an electric useful signal ($U_n$(t)) which is determined by the output signal ($U_x$(t)) of a variable-sensitivity sensor device (1), the output signal ($U_x$(t)) of the sensor device (1) being determined by the measured total pressure (p),
   in which the sensor device (1) and a control device (2) form a single-loop control loop, and the sensitivity of the sensor device (1) is dependent on the manipulated variable ($U_y$) of the control device (2), and
   in which the control difference ($U_{xd}$) of the control device (2) is determined by a setpoint ($U_w$) and the output signal ($U_x$(t)) of the sensor device (1), and

in which the control device (2) has an integrating behaviour and the integration time constant of the control device (2) is a factor 2 greater than the period of the fundamental oscillation of a rapid change ($\Delta p$) to be detected in the pressure signal (p(t)).

2. Pressure transducer according to Claim 1, in which the control difference ($U_{xd}$) depends on the setpoint ($U_w$) plus an offset variable ($U_{os}$) which is determined by offset and common-mode errors of the components of the pressure transducer.

3. Pressure transducer according to Claim 2, in which the offset variable depends on a constant offset variable ($U_{osk}$) and a dynamic offset variable ($U_{osd}$), the dynamic offset variable ($U_{osd}$) being determined by the manipulated variable ($U_y$) of the control device (2).

4. Pressure transducer according to Claim 1, in which the integration time constant of the control device (2) is at least a factor 4 greater than the period of the fundamental oscillation of a rapid change to be detected in the pressure signal (p(t)).

5. Pressure transducer according to Claim 1, in which the sensor device (1) contains a sensor with a pressure-dependent resistor (111) to measure the total pressure (p).

6. Pressure transducer according to Claim 5, in which the pressure-dependent resistor of the sensor is arranged in a resistance measuring bridge (11), the bridge supply current/voltage ($I_b/U_b$) of the resistance measuring bridge (11) being determined by the manipulated variable ($U_y$) of the control device (2), and the output signal ($U_x$) of the sensor device (1) being determined by the bridge diagonal voltage ($U_d$) of the resistance measuring bridge (11).

7. Pressure transducer according to Claim 6, in which two differential amplifiers (12) (13) calculate the balance of the bridge diagonal voltage ($U_d$), the setpoint ($U_w$) and an offset variable ($U_{os}$), the offset variable ($U_{os}$) depending on a bridge offset ($s_{off}$) of the resistance measuring bridge (11), a common amplifier offset ($v_{off}$) of the differential amplifiers (12) (13) and the manipulated variable ($U_y$) of the control device (2).

8. Pressure transducer according to Claim 1, in which the control device has an integrator (22) and the control difference ($U_{xd}$) is amplified by a measuring amplifier (3), the input variable of the integrator (22) and the useful variable ($U_n$) being derived from the amplified control difference.

9. Pressure transducer according to Claim 8, in which the measuring amplifier (3) and integrator (22) have one operating point ($U_{ap}$), and the control difference ($U_{xd}$) assumes the value of the operating point ($U_{ap}$).

10. Pressure transducer according to Claim 1, in which the manipulated variable ($U_y$) of the control device (2) is monitored by a microprocessor which emits a warning signal when the manipulated variable ($U_y$) changes abruptly.

**Revendications**

1. Transducteur de pression, notamment pour la détection d'une collision latérale dans un véhicule automobile,

   qui transforme un signal de pression en un signal utile électrique ($U_n(t)$) qui est déterminé par le signal de sortie ($U_x(t)$) d'un dispositif capteur (1) ayant une sensibilité variable, le signal de sortie ($U_x(t)$) du dispositif capteur (1) étant déterminé par la pression totale (p) mesurée, dans lequel le dispositif capteur (1) et un dispositif de régulation (2) forment une boucle de régulation fermée et la sensibilité du dispositif capteur (1) dépend de la grandeur réglante ($U_y$) du dispositif de régulation (2), dans lequel la différence de régulation ($U_{xd}$) du dispositif de régulation (2) est déterminée par une valeur de consigne ($U_w$) et par le signal de sortie ($U_x(t)$) du dispositif capteur (1), et dans lequel le dispositif de régulation (2) a un comportement intégrateur et la constante de temps d'intégration du dispositif de régulation (2) est plus grande d'un facteur 2 que la durée de période de l'oscillation fondamentale d'une variation rapide, à détecter, ($\Delta p$) du signal de pression (p(t)).

2. Transducteur de pression selon la revendication 1, dans lequel la différence de régulation ($U_{xd}$) dépend de la valeur de consigne ($U_w$) plus une grandeur d'offset ($U_{os}$) qui est déterminée par des erreurs d'offset et de synchronisme des composants du transducteur de pression.

3. Transducteur de pression selon la revendication 2, dans lequel la grandeur d'offset dépend d'une grandeur d'offset constante ($U_{osk}$) et d'une grandeur d'offset dynamique ($U_{osd}$), la grandeur d'offset dynamique ($U_{osd}$) étant déterminée par la grandeur réglante ($U_y$) du dispositif de régulation (2).

4. Transducteur de pression selon la revendication 1, dans lequel la constante de temps d'intégration du dispositif de régulation (2) est plus grande au moins d'un facteur 4 que la durée de période de l'oscillation fondamentale d'une variation rapide, à détecter, du signal de pression (p(t)).

5. Transducteur de pression selon la revendication 1, dans lequel le dispositif capteur (1) contient un capteur ayant une résistance (111), dépendante de la pression, en vue de la mesure de la pression totale (p).

6. Transducteur de pression selon la revendication 5, dans lequel la résistance, dépendante de la pression, du capteur est montée dans un pont de mesure à résistances (11), le courant/tension d'alimentation de pont ($I_b$/$U_b$) du pont de mesure à résistances (11) est déterminé par la grandeur réglante ($U_y$) du dispositif de régulation (2) et le signal de sortie ($U_x$) du dispositif capteur (1) est déterminé par la tension diagonale de pont ($U_d$) du pont de mesure à résistances (11).

7. Transducteur de pression selon la revendication 6, dans lequel deux amplificateurs différentiels (12, 13) traitent par calcul la tension diagonale de pont ($U_d$), la valeur de consigne ($U_w$) et une grandeur d'offset ($U_{os}$), la grandeur d'offset ($U_{os}$) étant dépendante d'un offset de pont ($s_{off}$) du pont de mesure à résistances (11), d'un offset d'amplificateur commun ($v_{off}$) des amplificateurs différentiels (12, 13) et de la grandeur réglante ($U_y$) du dispositif de régulation (2).

8. Transducteur de pression selon la revendication 1, dans lequel le dispositif de régulation a un intégrateur (22) et la différence de régulation ($U_{xd}$) est amplifiée par un amplificateur de mesure (3), la grandeur d'entrée de l'intégrateur (22) et la grandeur utile ($U_n$) étant déduites de la différence de régulation amplifiée.

9. Transducteur de pression selon la revendication 8, dans lequel l'amplificateur de mesure (3) et l'intégrateur (22) ont un point de fonctionnement dynamique ($U_{ap}$) et la différence de régulation ($U_{xd}$) prend la valeur du point de fonctionnement dynamique ($U_{ap}$).

10. Transducteur de pression selon la revendication 1, dans lequel la grandeur réglante ($U_y$) du dispositif de régulation (2) est surveillée par un microprocesseur qui délivre un signal d'avertissement lorsque la grandeur réglante ($U_y$) varie brusquement.

FIG 1

FIG 2

FIG 3

FIG 4

FIG 5

Uxd → | MESS-VERSTAERKER | Un → | AUSLOESE-PROZESSOR |

3

5

P

2  21

22

23

1

| VERGLEICHER | → | INTE-GRATOR | → | STELL-GLIED | Uy → | SENSOR-EINRICHTUNG | Ux

Uw+Uos

4

| MIKRO-PROZESSOR |

FIG 6

Un → | AUSLOESE-PROZESSOR |

5

21

Uap

3

22

23

| VERGLEICHER | → | MESS-VERSTAERKER | → | INTE-GRATOR | → | STELL-GLIED | Uy

Uxd

Uap

Ux

1

| SENSOR-EINRICHTUNG |

Uosd+Uosk+Uw

4

| MIKRO-PROZESSOR |

FIG 7